# EUROPEAN PATENT SPECIFICATION

(11) **EP 2 908 000 B1**
(45) Date of publication and mention of the grant of the patent: **12.04.2017**
(21) Application number: 12759492.7
(22) Date of filing: 15.06.2012
(51) Int. Cl.: F03D 1/00, B66C 23/20

(54) **LIFTING DEVICE FOR INSTALLING AND REMOVING COMPONENTS OF A WIND TURBINE**
HEBEVORRICHTUNG ZUR MONTAGE UND ENTFERNUNG VON KOMPONENTEN EINER WINDTURBINE
DISPOSITIF ÉLÉVATEUR POUR LE MONTAGE ET LE DÉMONTAGE DE COMPOSANTS D'UNE ÉOLIENNE

(30) Priority: 20.06.2011 ES 201100744 P
(43) Date of publication of application: 19.08.2015
(73) Proprietor: Leunamme Engineering Sociedad Limitada Unipersonal, 31620 Gorraiz, Navarra (ES)
(72) Inventor: Garcia de la Peña Razquin, Julio, 31001 Pamplona (ES)
(74) Representative: Carvajal y Urquijo, Isabel
(86) International application number: PCT/ES2012/000171
(87) International publication number: WO 2012/175766

(56) References cited:
- DE-U1- 20 018 890
- GB-A- 1 404 135
- JP-A- 2005 082 352
- JP-A- 2008 094 628
- JP-A- 2010 195 594
- US-A- 3 620 579
- US-A1- 2010 168 960

## Description

### TECHNICAL FIELD

The present invention relates to a lifting device for assembly and disassembly of wind turbines components, tries to solve the problem to assemble and to disassemble components in a wind turbine generator without the aid of cranes.

### STATE OF THE ART

The current practice is the use of one or several cranes to mount or to change to components such as a blade or the whole rotor. The use of cranes means, for the Operation and Maintenance companies of the wind turbine generators, a high economic cost and long response times derived from the availability of the crane as well as of the down time of the intervention with cranes, which is much longer than the method proposed by this invention. Additionally, the use of cranes is frequently constrained to the existence of good weather conditions. All these requirements cause that the wind turbine generator is stopped more time than needed, increasing the down time and not generating energy, which implies important losses for the client who operates the wind farm.

There are some patents about the use of methods of exchanging components that use cables and slings.

Document JP2008094628 discloses a crane capable of being constructed relatively speedily, requiring a relatively small surface area near a slender structure while constructing and using the crane. The crane is designed for carrying out operations on a slender structure, such as a wind turbine or an aerial mast. The crane comprises a base unit with a multiple number of telescoping sections which are, in operative position, at least partly telescoped out and oriented in a vertical direction.

The base unit is, in the operative position, at least one height, laterally fixed to the slender structure via a fixing structure.

### DESCRIPTION OF THE INVENTION

According to the present invention, this aim is achieved thanks to a lifting device to assemble and disassemble turbine components in a wind turbine generator having a nacelle, as defined in the characterizing portion of the appended claim 1.

In claims 2 to 4 preferred embodiments of the present invention are set up.

Since blade change corrective is the most frequent one in this industry, the described method and drawings are made for the case in that the component is a blade. In the case of being another component the one that mounts or disassembles, the last unit incorporates a horizontal platform adapted to the fixations or supports of such component (Gearbox, Generator, Converter, Transformer, etc.).

The method and invented device comprises a fixed part and another extendable one that can be towed or be part of a truck.

This platform can be revolving to facilitate the unloading in the truck in case, by limitations of access, the load is not possible with a simple folding down operation from the original position of the blade. The platform incorporates a structure with fixation elements that embraces the tower of the wind turbine generator to confer greater stability during the ascent and descent maneuver.

The platform can also incorporate, or instead of the arms of the previous paragraph, extending arms that confer greater support and stability, elevating the wheels over the ground level.

Once fixed the platform to the tower and/or the ground. The extendable part of the device begins to rise throughout the tower until arriving at the root of the blade.

In order to confer stability, the module next to the tower comprises two arms with wheels in its ends, which act as stabilizing guides in the ascent and descent maneuver.

One in the upper position, the module described in the former paragraph incorporates also two clamps, which hold the blade in the root and in the middle point.

After holding the blade, it is unscrewed from the hub.

Once the blade is loose it comes down held by the extensive device.

Once down, the extendable device along with the blade gets down in front of the platform connected to the tower to approach the blade for loading it to the truck.

After leaving it on the truck, the platform attached to the tower gets also folded over the extensive device and the whole set gets towed.

In the case that the platform must lower more blades, as soon as the blade is on the truck supports, the two clamps gets open and it is left on the truck. Next, the extendable device gets folded back towards the platform fixed to the tower, the wind turbine generator rotor gets turned to position the next blade in vertical position pointing down in order to disassemble it.

The previously described method corresponds to the maneuver of disassembling in maintenance operations; the inverse method is applicable for the maneuver of assembly in maintenance or construction operations of the wind turbine generator.

The movements of fixation arms, guidance, clamps, extensive part and folding up and down, can be generated by a hydraulic unit, cables, jack ups or any other manual or mechanical driven device.

The fixation of the root to the extensive module also can be made through screws or nuts of the fixing of the blade to the hub.

### DRAWINGS DESCRIPTION

### Figure 1

Shows the start of the maneuver of disassembling a blade (c) from a wind turbine generator with its main elements, as performed by the lifting device (1) according to the present invention.

The wind turbine generator with its tower (a), hub (b) and blade(c)

The lifting device of this invention (1) is mounted on a truck (11) and is comprised by a platform (12) connected to a structure (2) with fixing elements (3) to the tower (a). An extendable set (4) which incorporates several extendable modules (9,10), in the case shown two intermediate modules (9) and one last module (10) at the free end of the set (4). The last module (10) has wheels (not shown) in the ends of the fixing arms (5) to provide guidance and stability during the maneuver, and clamps (6) to hold the blade (c).

The said platform (12) could be a fixed or revolver one, and therefore the extendable set (4) of modules (9,10) can be tilted a certain angle.

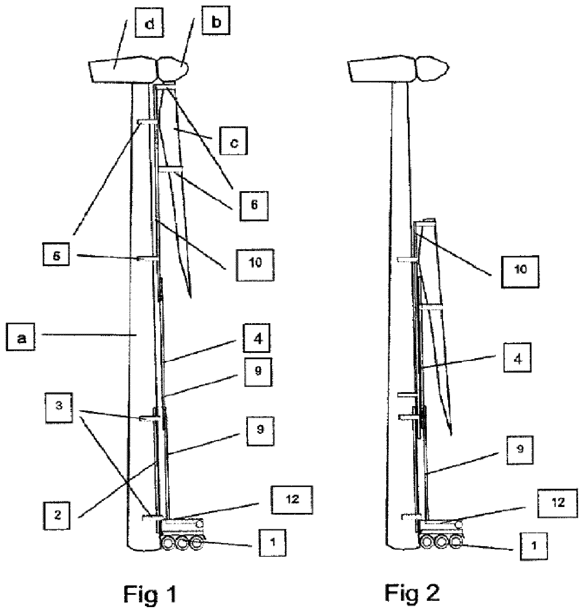

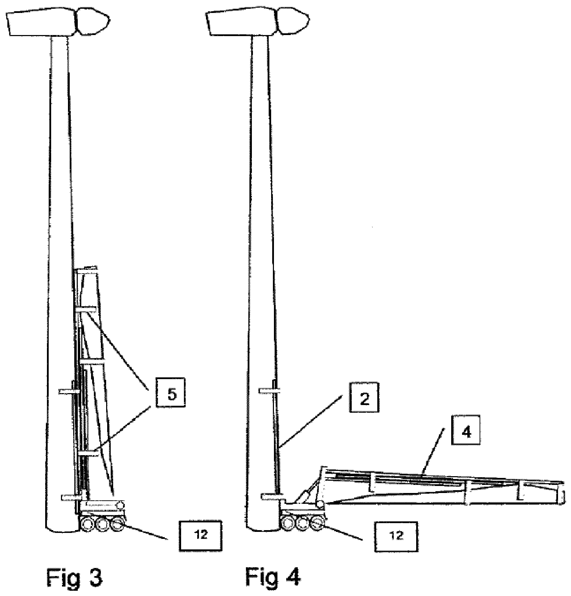

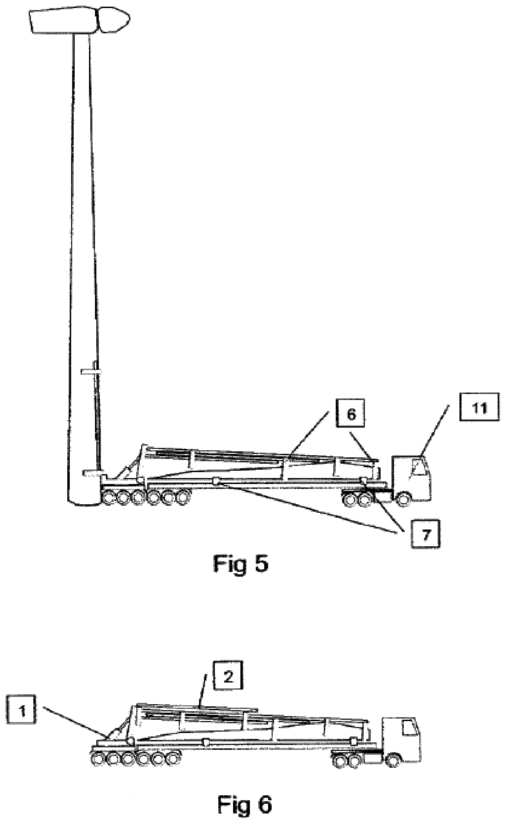

In figure 1 it can be seen how the device (1) is already embraced to the tower (a) through the structure (2) and the elements (3).

The extensive set (4) is expanded to its maximum range and has used the arms with wheels (not shown) to get guided along the tower (a) to reach the hub (b) with stability and safety.

The last module of the extendable set (4) has incorporated clamps (6) to the blade (c) allowing to workers inside the hub to release the blade (c).

### Figure 2

Once the blade (c) is released, the extendable set (4) moves down with the blade (c) attached.

### Figure 3

The blade (c) continues going down and the arms (5) get folded to allow the whole set to get to the ground level.

### Figure 4

When the blade has reached the ground level, the extendable set (4) plus the blade (c) gets folded in front of the platform (12) down to the position to load the truck (11).

### Figure 5

The blade (c) is laid over the trailer support (7) of the truck (11) and the clamps (6) get open.

### Figure 6

The structure (2) with the tower fixing elements gets folded over the extendable set (4) plus blade (c). The lifting device (1) gets attached (1) as a trailer.

## Claims

1. Lifting device to assemble and disassemble turbine components (c) in a wind turbine generator having a tower (a) and a nacelle (d),
**characterized in that** the lifting device (1) comprises
- a fixed or revolver platform (12), that carries
- an extendable set (4) comprised by several modules (9, 10) whereby the last module (10) is provided with
stabilizing and guiding arms (5) and sliding with wheels, while the modules (9,10) extend or shrink to enable the access to the precise vertical position of the turbine component (c) that needs to be changed or repaired; and
- the last module (10) being further
provided with supporting or fixing elements (6) to hold the turbine component (c) during the ascending or descending maneuver.

2. Lifting device according to claim 1, wherein the platform (12) incorporates a structure that embraces the tower (a) with one or more fixing elements (3).

3. Lifting device according to claim 1, further comprising a crane attached to the nacelle (d), in order to extract the turbine component (c) from the nacelle (d) and lay the turbine component (c) down to the supporting or fixing elements (6) for the turbine component (c) present in the last module (10) of the extendable set (4).

4. Lifting device according to claim 1, wherein the extendable set (4) can be folded down towards the platform (12) to allow loading and unloading the turbine component (c) from a truck (11) or vessel or any auxiliary loading element, surface or the ground.

## Patentansprüche

1. Hebevorrichtung zur Montage und Demontage von Turbinenkomponenten (c) in einem Windturbinengenerator aufweisend einen Turm (a) und eine Gondel (d), **dadurch gekennzeichnet, dass** die Hebevorrichtung (1)
- eine fixierte oder drehbare Plattform (12) umfasst, welche
- einen ausfahrbaren Satz (4) bestehend aus mehreren Modulen (9, 10) trägt, wobei das letzte Modul (10) mit Stabilisierungs- und Führungsarmen (5) versehen ist und welches mit Rädern gleitet, während die Module (9, 10) ausfahren oder einfahren, um den Zugang zur genauen vertikalen Position der Turbinenkomponente (c), welche gewechselt oder repariert werden muss, zu ermöglichen; und
- wobei das letzte Modul (10) zusätzlich mit Abstützungs- oder Fixierungselementen (6) versehen ist, um die Turbinenkomponente (c) während des Aufstieg- oder Abstiegsmanövers zu halten.

2. Hebevorrichtung nach Anspruch 1, wobei die Plattform (12) eine Struktur einbaut, welche den Turm (a) mit einem oder mehreren Fixierungselementen (3) umfasst.

3. Hebevorrichtung nach Anspruch 1, zusätzlich umfassend einen an der Gondel (d) befestigten Kran, um die Turbinenkomponente (c) aus der Gondel (d) zu entnehmen und die Turbinenkomponente (c) auf die Abstützungs- oder Fixierungselemente (6) für die im letzten Modul (10) des ausfahrbaren Satzes (4) vorhandene Turbinenkomponente (c) abzulegen.

4. Hebevorrichtung nach Anspruch 1, wobei der ausfahrbare Satz (4) zur Plattform (12) hin heruntergefaltet werden kann, um ein Laden und Entladen der Turbinenkomponente (c) aus einem Lastwagen (11) oder Fahrzeug oder einem beliebigen Hilfsladeelement, einer Oberfläche oder dem Boden zu ermöglichen.

## Revendications

1. Dispositif élévateur pour monter et démonter des composants de turbine (c) dans un générateur d'éolienne ayant une tour (a) et une nacelle (d), **caractérisé en ce que** le dispositif élévateur (1) comprend
- une plate-forme fixe ou rotative (12) qui porte
- un ensemble extensible (4) composé de plusieurs modules (9, 10) dans lequel le dernier module (10) est pourvu de bras de stabilisation et de guidage (5) est glissant avec des roues, tandis que les modules (9, 10) s'étendent ou se réduisent pour permettre l'accès à la position verticale précise du composant de turbine (c) qui a besoin d'être changé ou réparé ; et
- le dernier module (10) étant en outre pourvu d'éléments de support ou de fixation pour soutenir le composant de turbine (c) pendant la manoeuvre de monté ou de descente.

2. Dispositif élévateur selon la revendication 1, dans lequel la plate-forme (12) incorpore une structure qui comporte la tour (a) avec un ou plusieurs éléments de fixation (3).

3. Dispositif élévateur selon la revendication 1, comprenant en outre une grue fixée à la nacelle (d), afin d'extraire le composant de turbine (c) de la nacelle (d) et déposer le composant de turbine (c) sur les éléments de support ou de fixation (6) pour le composant de turbine (c) présent dans le dernier module (10) de l'ensemble extensible (4).

4. Dispositif élévateur selon la revendication 1, dans lequel l'ensemble extensible (4) peut être replié vers la plate-forme (12) pour permettre charger et décharger le composant de turbine (c) d'un camion (11) ou d'un navire ou de tout élément de charge auxiliaire, de toute surface ou du sol.
